# EUROPÄISCHE PATENTSCHRIFT

(11) **EP 4 002 658 B1**
(45) Veröffentlichungstag und Bekanntmachung des Hinweises auf die Patenterteilung: **31.07.2024**
(21) Anmeldenummer: 21206409.1
(22) Anmeldetag: 04.11.2021
(51) Int. Cl.: H02K 15/04

(54) **VERFAHREN ZUR HERSTELLUNG EINER WICKLUNG FÜR ELEKTRISCHE MASCHINEN**
METHOD FOR PRODUCING A COIL FOR AN ELECTRIC MACHINE
PROCÉDÉ DE FABRICATION D'UN ENROULEMENT POUR MACHINES ÉLECTRIQUES

(30) Priorität: 18.11.2020 DE 102020214548
(43) Veröffentlichungstag der Anmeldung: 25.05.2022
(73) Patentinhaber: Robert Bosch GmbH, 70442 Stuttgart (DE)
(72) Erfinder: Walz, Daniel, 70469 Stuttgart (DE)

(56) Entgegenhaltungen:
- CN-A- 108 110 973
- DE-A1- 102014 226 224
- JP-A- 2004 072 839
- US-A1- 2020 212 771
- US-A1- 2020 343 797

## Beschreibung

### Technisches Gebiet

Die Erfindung bezieht sich auf ein Verfahren zur Herstellung einer Wicklung für eine elektrische Maschine, wobei zunächst ein Eindrehen von haarnadelförmigen Wicklungsteilen erfolgt und ein Zopf gefertigt wird. Des Weiteren bezieht sich die Erfindung auf die Verwendung des Verfahrens zur Herstellung eines Korbs oder eines komplexen Korbs aus mindestens einem Zopf für eine Statorwicklung einer elektrischen Maschine.

### Stand der Technik

Während klassische elektrische Maschinen, wie beispielsweise Elektromotoren, mit Wicklungen aus rundem Kupferdraht ausgestattet sind, werden moderne elektrische Maschinen aufgrund eines höheren Nutfüllfaktors mit rechteckigen Kupferdrähten hergestellt. Dazu werden haarnadelförmige Wicklungsteile eingesetzt, welche in den Stator gesteckt werden. Wicklungen in Haarnadelkopfform sind aus DE 10 2019 105 583 A1 und DE 10 2019 122 550 A1 bekannt. Die einzelnen haarnadelförmigen Wicklungsteile, welche im Stator der elektrischen Maschine gemeinsam einen Durchmesser beschreiben, werden dabei als Zopf bezeichnet. Die Gemeinschaft aller vorhandenen Zöpfe in einem Stator bilden einen sogenannten Haarnadelkorb (Hairpin-Korb). Dieser ist keinesfalls bei jeder elektrischen Maschine identisch. Unterschiede bestehen zum Beispiel in der Form der Haarnadeln, einer Sprungweite, welche einen Abstand der Haarnadelfüße zueinander charakterisiert, ferner der Anzahl der Haarnadeln sowie auch im Steckmuster. Beispielsweise kann ein Stator durch zwei im Durchmesser unterschiedliche Zöpfe dargestellt werden, es besteht auch die Möglichkeit, hinsichtlich seines Durchmessers einen größeren Zopf und einen kleineren Zopf auszubilden, wobei der größere der Zöpfe über den kleineren gestülpt wird.

Hinsichtlich der Montagetechnik liegt der Fokus in der Herstellung von Wicklungen, insbesondere sogenannter Wicklungskörbe. In den bisher bekannten klassischen Herstellungsverfahren werden die Haarnadeln entweder einzeln von oben beispielweise gesteckt oder aber Haarnadel für Haarnadel einzeln kontinuierlich eingedreht. Beide Vorgehensweisen lassen sich bei einfacheren Haarnadelkörben darstellen. Bei zunehmend komplizierteren Haarnadelkörben können derartige Verfahren aufgrund der größeren Prozesszeit und der steigenden Werkzeugkomplexität nicht mehr wirtschaftlich eingesetzt werden.

In den klassischen, bisher eingesetzten Montageprozessen werden Haarnadeln umfassende Zöpfe bisher entweder durch einzelnes Stecken von oben hergestellt oder aber auch durch ein kontinuierlich erfolgendes Eindrehen der Haarnadeln, welche die Wicklungsteile darstellen. Während bei einem Steckvorgang die einfacheren Haarnadelzöpfe direkt in den Stator gesteckt werden können, ist beim kontinuierlichen Eindrehen der Haarnadelkorb zuerst in einem separaten Werkzeug herzustellen, bevor er anschließend als Ganzes in einen Stator eingesteckt wird. Beide Verfahren, das Stecken sowie das kontinuierliche Eindrehen eignen sich jedoch nicht für alle Arten von Haarnadelkörben. Beim Einstecken tritt u. a. das Problem auf, dass es bei einer zu großen Anzahl von Haarnadeln beziehungsweise Haarnadelzöpfen und einer zu auskragend konfigurierten Kopfform der Haarnadeln zu Kollisionen beim Steckvorgang kommen kann. Insbesondere beim Steckvorgang des letzten, innerhalb des zu erstellenden Zopfes einzusetzenden Wicklungsteils, welches den Haarnadelzopf schließt, stellt oftmals eine prozesstechnische Herausforderung dar. Des Weiteren ist festzuhalten, dass diese Vorgehensweise vergleichsweise langsam abläuft.

Beim kontinuierlich erfolgenden Eindrehen von in Haarnadelform beschaffenen Wicklungsteilen wird ein Fuß des haarnadelförmigen Wicklungsteils in ein kontinuierlich drehendes Werkzeug gesteckt, während ein gegenüberliegender Fuß ein und desselben Wicklungsteils in einem Außenring geführt wird. Während der Außenring beispielsweise unbeweglich ist, werden durch eine Verdrehbewegung des inneren Werkzeugs, d. h. des Innenrings, die haarnadelförmigen Wicklungsteile nach und nach einzeln eingedreht. Auf diese Weise kann der gesamte Haarnadelkorb in einem einzigen Werkzeug hergestellt werden. Nach Abschließen des Eindrehvorgangs ist mit einem separaten Werkzeug der Haarnadelkorb aus dem Werkzeug nach oben hin zu entnehmen und anschließend als Ganzes in den Stator zu überführen.

DE 10 2014 226224 A1 und US 2020/212771 A1 offenbaren weitere Beispiele für die Herstellung von Haarnadelkörben für elektrische Maschinen.

Eine derartige Vorgehensweise ermöglicht eine höhere Prozessgeschwindigkeit; andererseits lässt sich der erhaltene Haarnadelzopf mit dem Einfügen des letzten haarnadelförmigen Wicklungsteils einfach schließen. Allerdings erreicht auch diese Vorgehensweise ihre Grenzen, wenn die Verschaltung des Haarnadelkorbs zu komplex wird. In praxi hat sich außerdem gezeigt, dass das Werkzeug in seiner schlussendlichen Ausbaustufe sehr komplex und damit sehr teuer ist.

### Darstellung der Erfindung

Erfindungsgemäß wird ein Verfahren zur Herstellung einer Wicklung für eine elektrische Maschine mit zumindest nachfolgenden Verfahrensschritten vorgeschlagen:
a) Einstecken von Wicklungsteilen mit einem ersten Teil in einen ersten Träger und mit einem zweiten Teil in einen zweiten Träger, wobei einer der Träger relativ zum anderen bewegbar ist,
b) Vornahme einer Verdrehung des ersten Trägers um seine Z-Achse relativ zum zweiten Träger oder Verdrehung des zweiten Trägers relativ zum ersten Träger zur Erzeugung einer Eindrehung der Wicklungsteile;
c) Einfahren einer Aushebeeinrichtung in einen gemäß b) geformten Zopf aus eingedrehten Wicklungsteilen,
d) Positionieren von Aushebeelementen in Freiräumen der gemäß b) eingedrehten Wicklungsteile des Zopfs,
e) Ausheben des Zopfs in Z-Richtung und
f) Schließen des Zopfs aus gemäß b) eingedrehten Wicklungsteilen durch schwerkraftbedingtes Verrutschen des an der Aushebeeinrichtung aufgenommenen Zopfs an dieser.

Durch das erfindungsgemäß vorgeschlagene Verfahren kann insbesondere erreicht werden, dass sich sowohl einfache als auch komplexe Geometrien von Wicklungskörben aus eingedrehten, haarnadelförmigen Wicklungsteilen herstellen lassen, welche mit den bisherigen Lösungen nicht oder nur in einer extrem langen Prozesszeit zu fertigen waren, die eine Großserienfertigung völlig unmöglich machen.

Des Weiteren lässt sich durch das erfindungsgemäß vorgeschlagene Verfahren eine erheblich höhere Prozesssicherheit erreichen. In Weiterbildung des erfindungsgemäß vorgeschlagenen Verfahrens werden die Wicklungsteile, die in U-Form oder haarnadelförmig ausgeführt sind, in Öffnungen im ersten und zweiten Träger unter Beibehaltung eines Steckmusters eingesteckt.

In Weiterbildung des erfindungsgemäß vorgeschlagenen Verfahrens wird gemäß f) das schwerkraftbedingte Verrutschen der eingedrehten Wicklungsteile schwerkraftbedingt entsprechend einer Neigung einer Schräge von Aushebeelementen der Aushebeeinrichtung zum Schließen des Zopfs eingesetzt.

Erfindungsgemäß erfolgt gemäß f) ein Schließen des Zopfs aus gemäß b) eingedrehten Wicklungsteilen, nachdem Füße der Wicklungsteile Öffnungen im ersten und zweiten Träger vollständig verlassen haben und mithin frei sind. Nach dem vollständigen Verlassen entsprechender Öffnungen am ersten und am zweiten Träger erfolgt somit das Schließen des Zopfs schwerkraftbedingt, ohne dass ein separater Prozessschritt und ein dazu erforderliches separates Werkzeug erforderlich ist.

In vorteilhafter Weise wird beim erfindungsgemäß vorgeschlagenen Verfahren durch das schwerkraftbedingte Verrutschen der Aushebeelemente eine Vergrö-βerung oder eine Verringerung eines Durchmessers eines Zopfs nach dem Ausheben erreicht.

Beim erfindungsgemäß vorgeschlagenen Verfahren werden die Aushebeelemente der Aushebeeinrichtung während der Einfahrbewegung der Aushebeeinrichtung in den gemäß b) geformten Zopf in einer eingefahrenen Position gehalten und beim Ausheben des Zopfs gemäß e) in Z-Richtung in eine ausgefahrene Position überführt.

Das erfindungsgemäß vorgeschlagene Verfahren zur Herstellung eines Wicklungskorbs einer elektrischen Maschine erfolgt an einer Vorrichtung, die ein Eindrehwerkzeug sowie die in dieses in Z-Richtung einfahrbare Aushebeeinrichtung enthält.

In vorteilhafter Weise wird bei der Vorrichtung ein Eindrehwerkzeug eingesetzt, welches mindestens zwei konzentrisch in Bezug aufeinander angeordneten ersten und zweiten Träger umfasst, die jeweils in Ringform ausgeführt sind, die entlang ihres Umfangs eine Anzahl von Öffnungen aufweisen, die in einreihiger Ausführung oder in mehrreihiger Ausführung angeordnet sein können. Dadurch kann in vorteilhafter Weise durch das jeweilige Öffnungsmuster im ersten und zweiten Träger unterschiedlichen Wicklungserfordernissen und unterschiedlichen Geometrien einfach durch Austausch entsprechender Teile Rechnung getragen werden.

In einer vorteilhaften Weiterbildung der erfindungsgemäß vorgeschlagenen Vorrichtung übersteigt ein Öffnungsdurchmesser der Öffnungen im ersten und zweiten Träger Abmessungen eines Rechteckquerschnitts, in welchem erste und zweite Teile der Wicklungsteile ausgeführt sind. Durch die größere Dimensionierung des Öffnungsdurchmessers der Öffnungen im ersten und zweiten Träger kann erreicht werden, dass sich die im Rechteckquerschnitt ausgeführten Teile, insbesondere die Schenkel eines haarnadelförmigen Wicklungsteils bei der Ausführung des Eindrehvorgangs im Eindrehwerkzeug verdrehen können, so dass bei der Durchführung der Verdrehbewegung ein gleichmäßiges Muster im eingedrehten Wicklungszopf entsteht.

In einer vorteilhaften Weiterbildung der erfindungsgemäß vorgeschlagenen Vorrichtung umfasst der zweite Träger eine Anzahl von Nuten, die den in diese eingesteckten Teilen der Wicklungsteile eine Bewegungsbahn aufprägen, sobald eine Verdrehung im Gegenuhrzeigersinn und im Uhrzeigersinn des zweiten, insbesondere ringförmig ausgebildeten Trägers relativ zum ersten, beispielsweise stationär gehaltenen Trägers, erfolgt. Alternativ besteht die Möglichkeit, den ersten Träger relativ zu einem stationär gelagerten zweiten Träger zu verdrehen. Es sind beide Vorgehensweisen zur Erzeugung der Verdrehung der eingesteckten Wicklungsteile möglich. Dadurch lässt sich erreichen, dass die Eindrehbewegung im Eindrehwerkzeug symmetrisch ausgeführt wird und einen sehr hohen Grad an Symmetrie aufweisender Zopf erhalten wird.

Bei der erfindungsgemäß vorgeschlagenen Vorrichtung weist das Eindrehwerkzeug eine Grundplatte auf, die eine Reibfläche enthält, auf der die Füße der ersten und zweiten Teile der haarnadelförmig ausgebildeten Wicklungsteile aufstehen.

Bei der erfindungsgemäß vorgeschlagenen Vorrichtung wird neben dem Eindrehwerkzeug eine Aushebevorrichtung eingesetzt, so dass eine zweistufige Vorgehensweise hinsichtlich der Herstellung eines Wicklungskorbs durchlaufen wird. Die Aushebevorrichtung umfasst eine Anzahl blechförmiger Aushebeelemente, die in Führungsnuten einer Basisplatte in radiale Richtung geführt sind.

Die erfindungsgemäß vorgeschlagene Vorrichtung zur Durchführung des erfindungsgemäßen Verfahrens umfasst die Aushebevorrichtung mit einem Innenkegel, der über eine Absenkbewegung die einzelnen Aushebeelemente von ihrer eingefahrenen Position in ihre ausgefahrene Position überführt und umgekehrt.

Des Weiteren ist die Vorrichtung so ausgebildet, dass die Aushebeeinrichtung Aushebeelemente umfasst, die eine Schräge aufweisen, die in radialer Richtung gesehen radial nach außen oder radial nach innen abfällt. Dadurch kann das Schließen des aus verdrehten Wicklungsteilen gefertigten Zopfs in symmetrischer Art und Weise erreicht werden, was schwerkraftbedingt erfolgt, kein separates Werkzeug erfordert und mithin einen separaten zum Schließen des Wicklungskorbs erforderlichen Prozessschritt vermeidet.

Darüber hinaus bezieht sich die Erfindung auf die Verwendung des Verfahrens zur Herstellung einer Wicklung beziehungsweise eines Wicklungskorbs aus mindestens einem Zopf, bevorzugt mehreren Zöpfen, für eine Statorwicklung einer elektrischen Maschine.

### Vorteile der Erfindung

Durch die erfindungsgemäß vorgeschlagene Lösung kann in vorteilhafter Weise ein zweistufiger Herstellungsprozess angegeben werden, welcher bei der Herstellung der Wicklung beziehungsweise eines Wicklungskorbs dessen endgültiges Schließen einerseits als auch die Entnahme eines Wicklungskorbs umfasst.

Beim erfindungsgemäß vorgeschlagenen zweistufigen Verfahren unter Einsatz eines Eindrehwerkzeugs, in welches eine Aushebeeinrichtung einfährt, lassen sich in vorteilhafter Weise sowohl einfache als auch komplexe Zopfgeometrien herstellen, welche mit den bisherigen obenstehend geschilderten Lösungen nicht zu fertigen waren. Das erfindungsgemäß vorgeschlagene Verfahren zeichnet sich durch eine sehr große Prozesssicherheit aus verglichen mit einem reinen Einstecken haarnadelförmiger Wicklungsteile oder deren kontinuierlichem Eindrehen. Durch das erfindungsgemäß vorgeschlagene Verfahren sind geringere Taktzeiten verglichen mit den reinen Einsteckoperationen oder einem kontinuierlichen Eindrehen erreichbar. Des Weiteren verdient festgehalten zu werden, dass beim erfindungsgemäß vorgeschlagenen Verfahren Werkzeuge mit geringer Komplexität eingesetzt werden können. Schließlich kann in vorteilhafter Weise durch das Schließen des Zopfs als Teil eines Korbs mittels der Wirkung der Schwerkraft ein Prozessschritt beziehungsweise ein zur Durchführung von diesem erforderliches Werkzeug vollständig entfallen.

Wenn ein Korb hergestellt wird, der aus mehreren Zöpfen besteht, kann dieser Korb Zopf für Zopf aufgebaut werden. Ist der erste Zopf hergestellt und ausgehoben, wird dieser in den Stator gesteckt. Bei diesem Einsteckvorgang in den Stator kann durch die erfindungsgemäß vorgeschlagene Lösung erreicht werden, dass der Durchmesser des hergestellten Zopfs nach dem Ausheben nochmals variiert werden kann, um so den idealen Durchmesser des hergestellten Zopfs für einen möglichst einfachen Einsteckvorgang in den Stator zu erreichen. Damit kann durch das erfindungsgemäß vorgeschlagene Verfahren eine Veränderung des Durchmessers des Zopfs erreicht werden, sodass der sich daran anschließende weiter verarbeitende Prozessschritt des Einsteckens in den Stator der elektrischen Maschine und dessen Herstellung erheblich einfacher vorgenommen werden kann.

### Kurze Beschreibung der Zeichnungen

Ausführungsformen der Erfindung werden anhand der Zeichnungen und der nachfolgenden Beschreibung näher erläutert.

Es zeigen:
- Figur 1: die Darstellung eines in Haarnadelform ausgebildeten Wicklungsteils,
- Figur 2: einen Korb, insbesondere einen Wicklungskorb zwei Zöpfe umfassend,
- Figur 3: einen Stator einer elektrischen Maschine mit einem eine komplexere Geometrie aufweisenden Korb aus haarnadelförmigen Wicklungsteilen,
- Figur 4: eine Darstellung des erfindungsgemäß eingesetzten Eindrehwerkzeugs,
- Figur 5: eine Ausführungsvariante des Innenrings des ersten Trägers des Eindrehwerkzeugs gemäß Figur 4,
- Figur 6: eine zweite Ausführungsvariante des ersten Trägers des Eindrehwerkzeugs gemäß Figur 4,
- Figur 7: eine Ausführungsvariante des zweiten Trägers des Eindrehwerkzeugs,
- Figur 8: eine weitere Ausführungsvariante des zweiten Trägers des Eindrehwerkzeugs gemäß der Darstellung in Figur 4,
- Figur 9: die Darstellung einer Grundplatte des Eindrehwerkzeugs mit Reibfläche,
- Figur 10: ein Eindrehwerkzeug mit einer Anzahl von in dieses eingesteckten haarnadelförmigen Wicklungsteilen,
- Figur 11: eine Detaildarstellung eines nicht vollständig geschlossenen Teils eines zu fertigenden Zopfs,
- Figur 12: eine perspektivische Darstellung einer Aushebeeinrichtung,
- Figur 13: einen Schnitt durch die Aushebeeinrichtung gemäß der Darstellung in Figur 12,
- Figur 14: eine Darstellung eines Aushebeelements, aufgenommen in einem Führungsschlitz einer Basisplatte,
- Figur 15: in ein Eindrehwerkzeug eingesteckte haarnadelförmige Wicklungsteile, in einem Steckmuster eingesteckt,
- Figur 16: durch eine Verdrehung des zweiten Trägers relativ zum ersten Träger erhaltene eingedrehte Wicklungsteile, die einen Zopf bilden,
- Figur 17: die Einfahrbewegung der Aushebeeinrichtung in das Eindrehwerkzeug,
- Figur 18: ein Ausfahren der einzelnen blechförmigen Aushebeelemente in Freiräume zwischen den eingedrehten Wicklungsteilen,
- Figur 19: ein Anheben der Aushebeeinrichtung soweit, dass die eingedrehten Wicklungsteile an ihrem Kopfbereich gerade berührt werden und
- Figur 20: ein vollständiges Ausheben des erhaltenen Korbs beziehungsweise Zopfs aus eingedrehten Wicklungsteilen durch die Aushebeeinrichtung aus dem ersten und zweiten Träger des Eindrehwerkzeugs.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

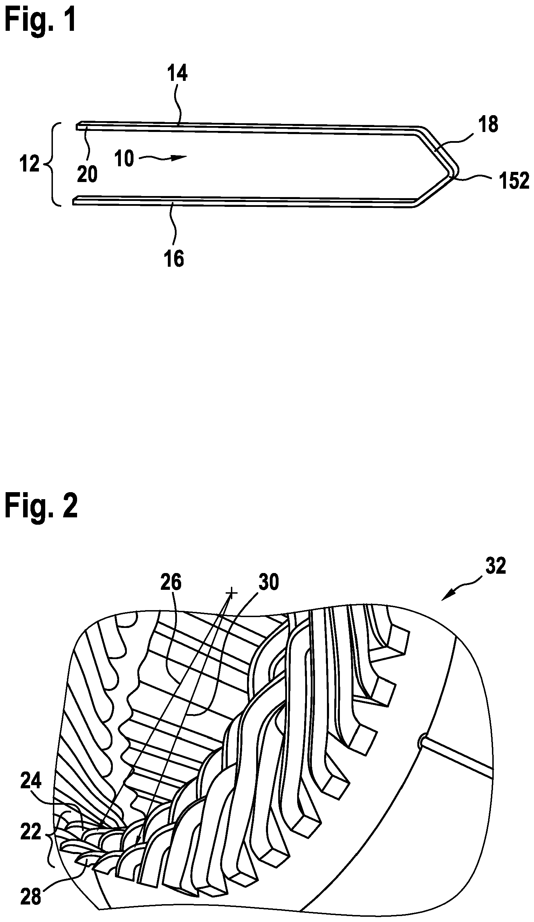

Figur 1 zeigt in schematischer Darstellung ein Wicklungsteil 10, welches in U-Form 12 ausgeführt ist und ähnlich einer Haarnadel 18 (Hairpin) beschaffen ist. Das Wicklungsteil 10 ist aus Kupfer oder einer Kupferlegierung gefertigt und weist einen Rechteckquerschnitt 20 auf. Von einem Wicklungsteilkopf 152 erstrecken sich im Wesentlichen parallel zueinander ein erster Teil 14 und ein zweiter Teil 16, welche schenkelförmig ausgeführt sind.

Figur 2 zeigt einen im Wesentlichen in Kranzform 22 beschaffenen ersten Zopf 24, ausgeführt in einem ersten Durchmesser 26 sowie einen diesen umgebenden zweiten Zopf 28 einen zweiten Durchmesser 30 aufweisend. Der zweite Zopf 28, im zweiten Durchmesser 30 ausgeführt, umgibt den ersten Zopf 24, der einen geringeren ersten Durchmesser 26 aufweist. Die beiden ineinander gesteckten Zöpfe 24, 28 bilden einen Korb 32, insbesondere einen Wicklungskorb.

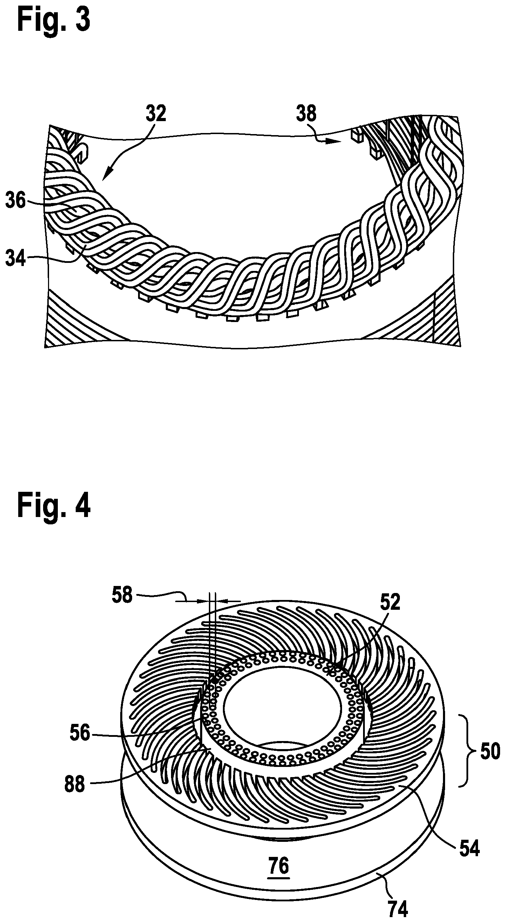

Figur 3 zeigt einen Korb 32, der als ein komplexer Korb 38 ausgeführt ist. In dieser Ausführungsvariante umgibt ein äußerer Zopf 34 einen innenliegenden inneren Zopf 36, jeweils ebenfalls aus in Form einer Haarnadel 18 beschaffenen Wicklungsteilen 10 gebildet.

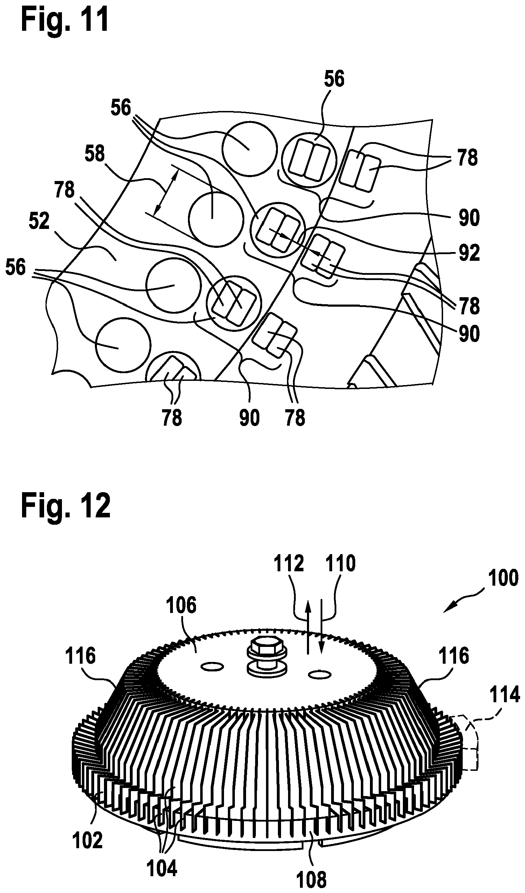

Erfindungsgemäß wird vorgeschlagen, ein Herstellungsverfahren für einen Zopf 128 oder einen Korb 32 einer Statorwicklung einer elektrischen Maschine anzugeben. Beim erfindungsgemäß vorgeschlagenen Verfahren erfolgt dies in einem zweistufigen Prozess, wobei ein Teil des Prozesses in dem anhand der Figuren 4 bis 11 dargestellten Eindrehwerkzeug 50 erfolgt und in einem zweiten Prozessteil das Ausheben eines fertig erhaltenen Zopfs 128 anhand der Figuren 12 bis 20 beschrieben wird.

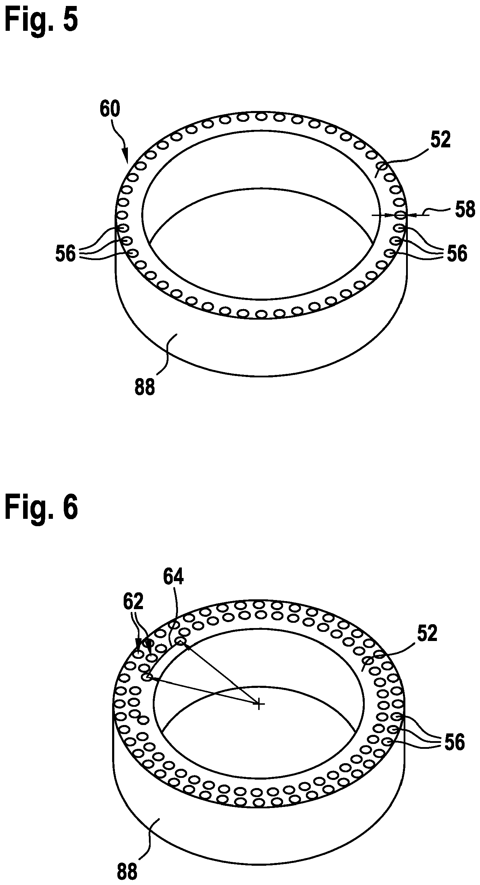

Der Darstellung gemäß Figur 4 ist ein Eindrehwerkzeug 50 zu entnehmen. Das Eindrehwerkzeug 50 ist als mehrteiliges Werkzeug ausgeführt und umfasst zum Beispiel in der in Figur 4 dargestellten Ausführungsvariante einen ersten Träger 52, der hier in Ringform ausgeführt ist. Der erste Träger 52 ist von einem zweiten Träger 54, ebenfalls ringförmig ausgeführt, umschlossen. Der erste Träger 52 ruht auf einer Grundplatte 74, deren Oberseite als Reibfläche 76 beschaffen ist. Eine Außenwand des ersten Trägers 52 ist durch Bezugszeichen 88 bezeichnet. Der Darstellung gemäß Figur 5 ist eine erste Ausführungsvariante des in Ringform beschaffenen ersten Trägers 52 zu entnehmen. Die Außenwand 88 des ersten Trägers 52 ist glatt ausgeführt und bildet eine Anschlagfläche. Der erste Träger 52 umfasst eine Anzahl von Öffnungen 56. Die Öffnungen 56 sind in einem Öffnungsdurchmesser 58 ausgeführt. Der Öffnungsdurchmesser 58 der Öffnungen 56 ist so bemessen, dass sich der erste Teil 14 beziehungsweise der zweite Teil 16 eines Wicklungsteils 10, im Rechteckquerschnitt 20 ausgeführt, innerhalb einer Öffnung 56 frei drehen kann, ohne verformt zu werden.

Aus der Darstellung gemäß Figur 5 geht hervor, dass der erste Träger 52 eine einreihige Ausführung 60 von Öffnungen 56 entlang seines Umfangs umfasst.

Die Öffnungen 56 können in gleichem Abstand in Bezug aufeinander in Umfangsrichtung angeordnet sein. Sie können jedoch auch in einem anderen Ausführungsmuster ausgeführt sein.

Figur 6 zeigt eine zweite Ausführungsvariante des ersten Trägers 52, im Wesentlichen ringförmig ausgebildet, in einer mehrreihigen Ausführung 62 von Öffnungen 56. Im in Figur 6 dargestellten Ausführungsbeispiel des ersten Trägers 52 verlaufen zwei konzentrische Kreise von Öffnungen 56, wobei die einzelnen Öffnungen 56 beispielsweise als Bohrungen und im Öffnungsdurchmesser 58 ausgeführt sind, derart, dass der Rechteckquerschnitt 20 des ersten Teils 14 beziehungsweise des zweiten Teils 16 des als Haarnadel 18 ausgeführten Wicklungsteils 10 aufgenommen werden kann und dessen freie Drehung möglich ist. In der Darstellung gemäß Figur 6 ist darüber hinaus noch eine Winkelvariation 64 angegeben, welche durch die Lage der einzelnen Öffnungen 56 im ringförmig ausgebildeten ersten Träger 52 verwirklicht sein kann. Dies hängt jeweils ab von der zu fertigenden Geometrie des jeweils herzustellenden Korbs 32.

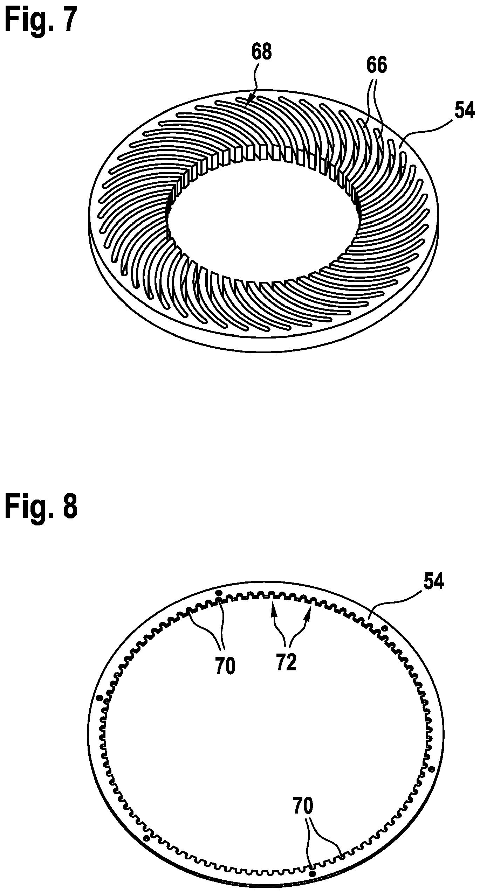

Figur 7 zeigt eine perspektivische Ansicht eines zweiten Trägers 54, ebenfalls ringförmig beschaffen, in welchen eine Anzahl von Nuten 66 eingearbeitet sind. Die einzelnen Nuten 66 geben eine Bewegungsbahn 68 vor. Die Nuten 66 sind an ihrem äußeren Umfang geschlossen und am inneren Umfang offen. Die einzelnen Nuten 66 weisen einen jeweils turbinenschaufelartig verlaufenden Freiraum auf, welcher die Bewegungsbahn 68 definiert.

In einer zweiten, in Figur 8 ausgeführten Ausführungsvariante des zweiten Trägers 54, ebenfalls ringförmig ausgeführt, befinden sich an dessen Innenumfangsfläche eine Anzahl von Aufnahmeöffnungen 70; in der in Figur 8 dargestellten Ausführungsvariante des zweiten Trägers 54 ist eine bahnlose Ausführung 72 des zweiten Trägers 54 dargestellt, im Gegensatz zur ersten Ausführungsvariante des zweiten Trägers 54 gemäß Figur 7, in dem Nuten 66 ausgeführt sind.

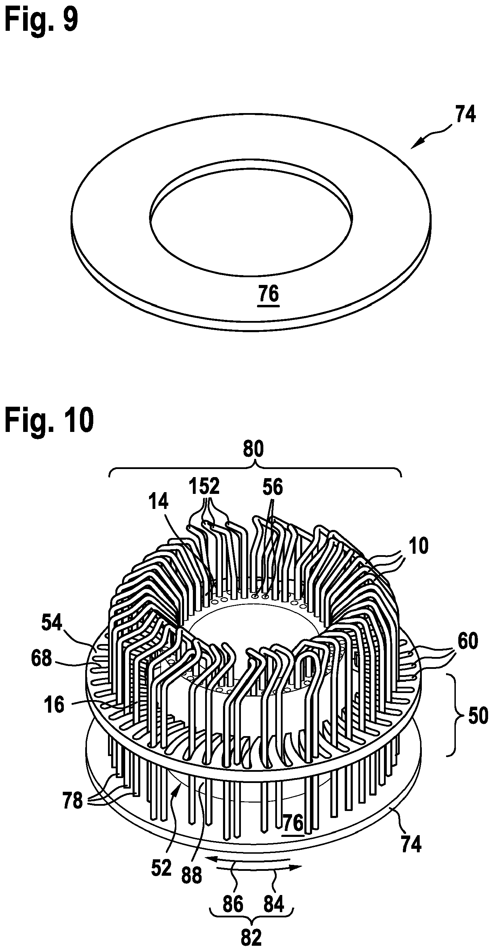

In Figur 9 schließlich ist die Grundplatte 74 des Eindrehwerkzeugs 50 dargestellt, deren Oberseite als Reibfläche 76 beschaffen ist.

Der Darstellung gemäß Figur 10 ist das Eindrehwerkzeug 50 in zusammengebautem Zustand zu entnehmen. Entsprechend einem individuellen Steckmuster 80 sind eine Anzahl von im Wesentlichen als Haarnadel 18 konfigurierten Wicklungsteilen 10 in die einzelnen Öffnungen 56 des innenliegenden ersten Trägers 52 eingesteckt, während beispielsweise zweite Teile 16 der als Haarnadeln 18 ausgebildeten Wicklungsteile 10 in Figur 10 in die Nuten 66 eingesteckt sind, die sich am zweiten Träger 54 befinden. In der in Figur 10 dargestellten Ausführungsvariante des Eindrehwerkzeugs 50 ist beispielsweise der zweite ringförmig beschaffene Träger 54 im Rahmen einer Verdrehung 82 relativ zum hier feststehend ausgeführten, ringförmigen ersten Träger 52 bewegbar. Die Verdrehung 82 kann sowohl im Gegenuhrzeigersinn 84 als auch im Uhrzeigersinn 86 durchgeführt werden.

Es ist alternativ auch möglich, den zweiten Träger 54, ringförmig ausgebildet, stationär auszuführen und stattdessen den ersten Träger 52 relativ beweglich auszubilden. Beide Varianten sind möglich, um eine Verdrehung 82, d. h. eine Relativbewegung zwischen dem beispielsweise erste Teile 14 des Wicklungsteils 10 aufnehmenden ersten Träger 52 und zweite Teile 16 des Wicklungsteils 10 aufnehmenden zweiten Träger 54 zu verwirklichen. Entsprechend dem jeweils herzustellenden Korb 32 oder Wicklungskorb für eine elektrische Maschine sind unterschiedliche Wicklungsteile 10 in einem bestimmten, individuell konfigurierten Steckmuster 80 eingesteckt. Aus der Darstellung gemäß Figur 10 geht hervor, dass die einzelnen eingesteckten Wicklungsteile 10 mit ihren Füßen 78 die Reibfläche 76, d. h. die Oberseite der Grundplatte 74 des Eindrehwerkzeugs 50 berühren.

Aus Figur 11 geht eine Detailansicht des Eindrehwerkzeugs 50 hervor, und zwar der Bereich, der zwischen dem innenliegenden ersten Träger 52 und dem diesen umschließenden zweiten Träger 54 gebildet ist.

Aus der Darstellung gemäß Figur 11, die hier vergrößert wiedergegeben ist, geht hervor, dass einzelne Öffnungen 56 im ersten Träger 52 freigeblieben sind, während in anderen Öffnungen 56 des ersten Trägers 52, hier in mehrreihiger Ausführung 62 ausgeführt, Doppelpaare 90 von Wicklungsteilen 10 beziehungsweise deren ersten Teilen 14 und deren zweiten Teilen 16 aufnehmen. Aus der Darstellung gemäß Figur 11 geht hervor, dass zwischen den Doppelpaaren 90 im ersten Träger 52 und den Doppelpaaren 90, die im zweiten Träger 54 angeordnet sind, ein Abstand a 92 verbleibt, so dass ein herzustellender Zopf 128 unvollständig geschlossen wäre. Anstelle von Doppelpaaren 90 könnten im ersten Träger 52 auch Einzelpaare gesteckt werden.

Zusätzlich zum anhand der Figuren 4 bis 11 beschriebenen Eindrehwerkzeug 50 kommt beim erfindungsgemäß vorgeschlagenen Verfahren ein Schließwerkzeug 100 zum Einsatz, welches vorzugsweise als Aushebeeinrichtung 102 ausgeführt ist. Gemäß der Darstellung in Figur 12 umfasst die Aushebeeinrichtung 102 eine Anzahl von im Wesentlichen senkrecht orientierten blechförmigen Aushebeelementen 104. Darüber hinaus umfasst die Aushebeeinrichtung 102 gemäß der Ansicht in Figur 12 einen Innenkegel 106, der sowohl eine Absenkbewegung 110 als auch eine Anhebebewegung 112 ausführt. Die Anzahl von regelmäßig voneinander beabstandeten einzelnen Aushebeelementen 104 ist auf einer Basisplatte 108 aufgenommen. Anstelle des Innenkegels 106, welcher zu einer noch zu beschreibenden Radialverstellung der einzelnen Aushebeelemente 104 führt, kann auch ein in Figur 12 nur angedeuteter Außenring 114 eingesetzt werden, der ebenfalls zu einer radialen Verstellung der einzelnen blechförmig ausgebildeten Aushebeelemente 104 eingesetzt werden kann. Aus der Darstellung gemäß Figur 12 geht zudem hervor, dass die regelmäßig voneinander beabstandeten Aushebeelemente 104 an ihren Enden eine Außenschräge 116 aufweisen.

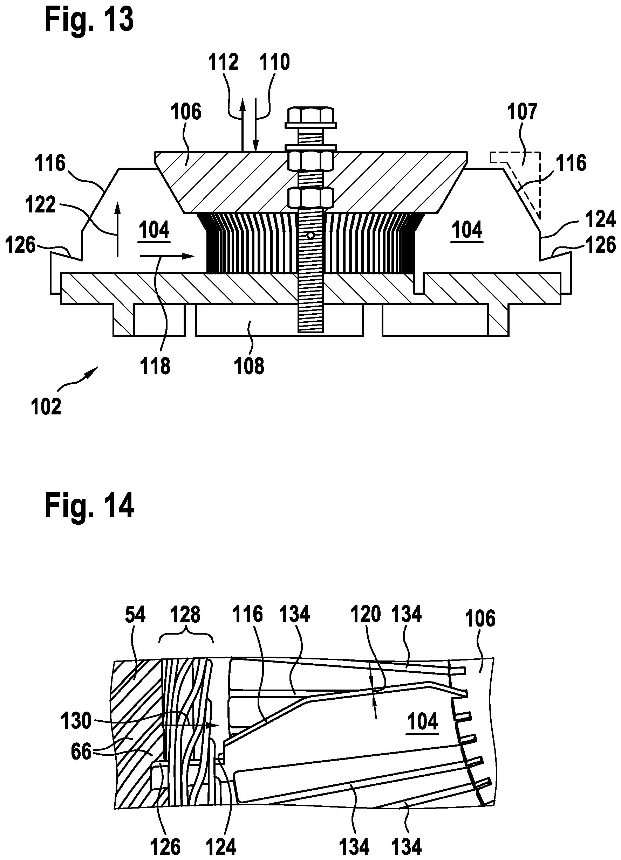

Figur 13 zeigt einen Schnitt durch die Aushebeeinrichtung 102, wie sie in Figur 12 in perspektivischer Draufsicht dargestellt ist. Aus der Darstellung gemäß Figur 13 geht hervor, dass die einzelnen, in Umfangsrichtung gleichmäßig voneinander beabstandeten, blechförmigen einzelnen Aushebeelemente 104 die Außenschräge 116 aufweisen, die in einen Vertikalteil 124 übergeht, der sich bis zu einer Schräge 126 erstreckt. Die Schräge 126 am radial außenliegenden Ende der einzelnen Aushebeelemente 104 kann entweder - wie in Figur 13 dargestellt - eine Neigung zur Innenseite aufweisen, es besteht jedoch alternativ auch die Möglichkeit, die Schräge 126 so auszuführen, dass die Neigung der Schräge 126 sich radial nach außen erstreckt. Eine Z-Achse ist in der Darstellung gemäß Figur 13 durch Bezugszeichen 122 identifiziert. Die einzelnen in Umfangsrichtung gleichmäßig voneinander beabstandeten Aushebeelemente 104 werden durch den verstellbaren Innenkegel 106 in radiale Richtung verstellt und führen eine Einfahrbewegung 18 in die Wicklungsteile 10 aus. Durch einen in Figur 13 gestrichelt angedeuteten Außenkegel 107 erfolgt eine Rückstellbewegung der Aushebeelemente 104 in radiale Richtung nach innen. Dazu dient der Neigungswinkel des Innenkegels 106 sowie eine entsprechende Schrägung an der radial innenliegenden Seite der einzelnen gleichmäßig in Umfangsrichtung voneinander beabstandeten blechförmigen Aushebeelemente 104. Auch in Figur 13 ist eine Absenkbewegung des Innenkegels 106 durch Bezugszeichen 110 bezeichnet, währenddessen eine Anhebebewegung durch Bezugszeichen 112 angedeutet ist.

Der Darstellung gemäß Figur 13 ist darüber hinaus zu entnehmen, dass die Unterseiten der einzelnen, in radiale Richtung verstellbaren Aushebeelemente 104 in Führungsnuten 134 der Basisplatte 108 geführt sind.

Figur 14 zeigt eine perspektivische Ansicht eines einzelnen blechförmig ausgebildeten Aushebeelements 104 der Aushebeeinrichtung 102 gemäß den Figuren 12 und 13.

Figur 14 zeigt, dass das blechförmig ausgebildete Aushebeelement 104 in einer relativ geringen Dicke 120 von wenigen Zehntel Millimetern ausgeführt ist. Das Aushebeelement 104 ist in einer Führungsnut 134 geführt und kann in radiale Richtung verstellt werden. Ein Ende des blechförmig ausgebildeten Aushebeelements 104 ist durch eine entsprechende Nut an der Umfangsfläche des Innenkegels 106 eingefahren. Auf der Schräge 126 am radial gegenüberliegenden Ende des blechförmig ausgebildeten Aushebeelements 104 liegen durch das Eindrehwerkzeug 50 verdrehte Wicklungsteile 10 auf, die aus den entsprechenden Nuten 66 des zweiten Trägers 54 des Eindrehwerkzeugs 50 hervorstehen. Aus der Darstellung gemäß Figur 14 geht hervor, dass eine Relativbewegung des erhaltenen Zopfs 128 entsprechend eines schwerkraftbedingten Verrutschens 130 möglich ist, für den Fall, dass die Schräge 126 in radialer Richtung nach innen gerichtet abfallend ist. Dieses Einrutschen des Zopfs 128 und damit dessen Schließen in Umfangsrichtung erfolgt beim erfindungsgemäß vorgeschlagenen Verfahren einzig und allein aufgrund der wirkenden Schwerkraft, ohne einen separaten Prozessschritt durchführen zu müssen und ohne ein separates Werkzeug zu benutzen. Die in der Dicke 120 ausgeführten einzelnen blechförmigen Aushebeelemente 104 verfügen über die Außenschrägen 116.

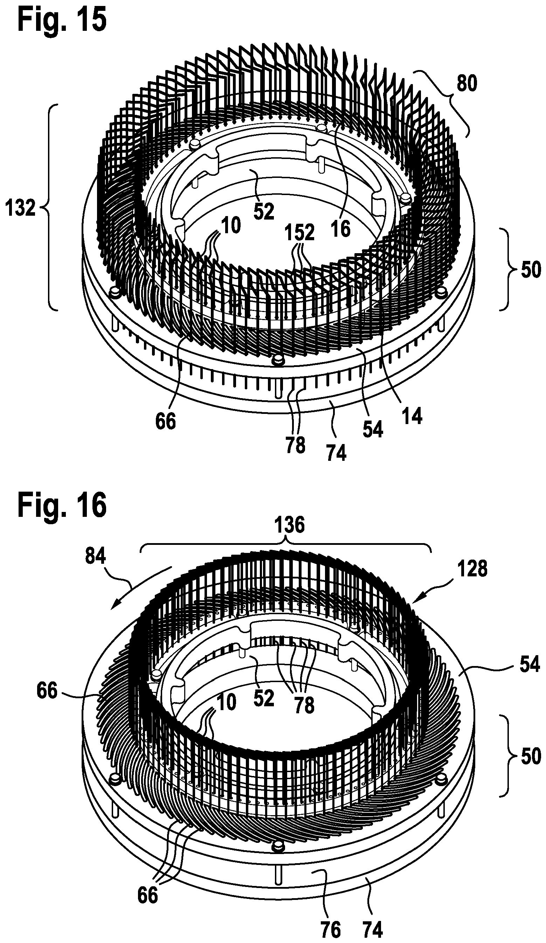

Figur 15 zeigt, dass in das Eindrehwerkzeug 50 entsprechend dem Steckmuster 80 eine Anzahl von als Haarnadeln 18 beschaffenen Wicklungsteilen 10 eingesteckt wird. Die Füße 78 der einzelnen Wicklungsteile 10 in Form der Haarnadeln 18 berühren dabei die Reibfläche 76 auf der Oberseite der Grundplatte 74 des mehrteilig ausgeführten Eindrehwerkzeugs 50. Die ersten beziehungsweise zweiten Teile 14, 16 eines jeden Wicklungsteils 10 durchsetzen dabei die Nuten 66 im zweiten Träger 54 und hier nur unvollständig dargestellte Öffnungen 56 im ersten Träger 52. Im Rahmen eines in Figur 15 dargestellten Einsteckschritts 132 sind die einzelnen Wicklungsteile 10 nur lose gesteckt. Aufgrund des Übermaßes des Öffnungsdurchmessers 58 der Öffnungen 56 in Bezug auf die Maße des Rechteckquerschnitts 20 können sich die jeweiligen Teile 14, 16, die eingesteckt sind, bei der Durchführung eines Eindrehschritts 136 gemäß Figur 16 frei in den Öffnungen 56 bewegen.

Figur 16 zeigt den bereits erwähnten Eindrehschritt 136, bei dem die Wicklungsteile 10 verdreht werden und den Zopf 128 bilden. Der Zopf 128 ist nach wie vor aus lose verdrehten Wicklungsteilen 10 zusammengesetzt. Die Verdrehung 82 verläuft entweder im Gegenuhrzeigersinn 84 oder im Uhrzeigersinn 86. Im Vergleich zur losen Anordnung gemäß dem Steckmuster 80 im Einsteckschritt 132 gemäß Figur 15, zeigt Figur 16 einen eingedrehten Zopf 128. Im Vergleich zur Darstellung gemäß Figur 15 ist in der Darstellung gemäß Figur 16 ein größerer Teil der Nuten 66 offen, was bedeutet, dass eine Relativbewegung der Wicklungsteile 10 in Bezug aufeinander bei der Verdrehung 82 des Eindrehwerkzeugs 50 stattgefunden hat.

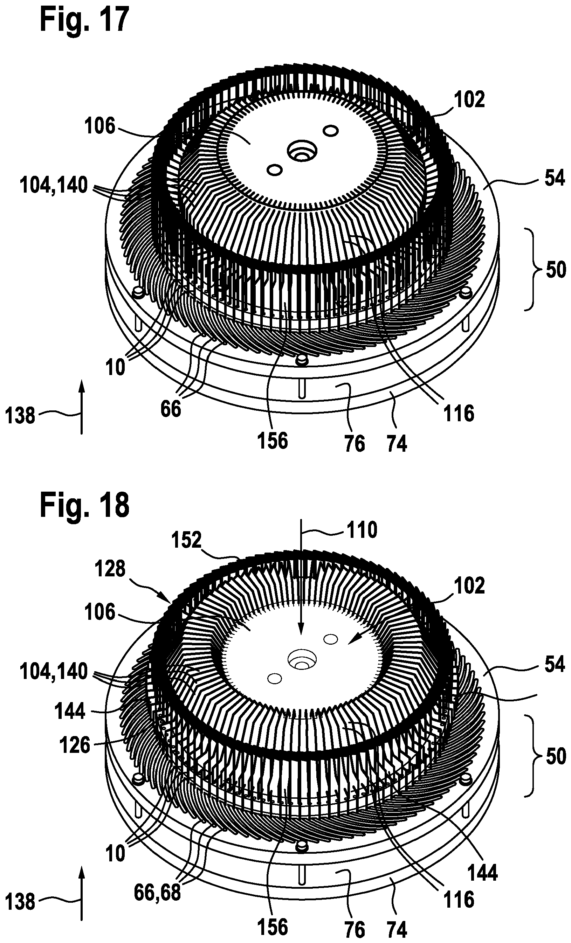

In der Darstellung gemäß Figur 17 ist gezeigt, wie entsprechend einer Einfahrbewegung 138 die Aushebeeinrichtung 102 beispielsweise von der Unterseite her in das Eindrehwerkzeug 50 einfährt, in dem sich der Zopf 128 befindet. Aus der Darstellung gemäß Figur 17 geht hervor, dass sich die einzelnen blechförmig ausgebildeten Aushebeelemente 104 der beispielsweise ein Iriswerkzeug darstellenden Aushebeeinrichtung 102 in ihrer eingefahrenen Position 140 befinden. Dies bedeutet, dass die einzelnen in Umfangsrichtung regelmäßig voneinander beabstandeten Aushebeelemente 104 der Aushebeeinrichtung 102 noch nicht in Freiräume 156 zwischen den einzelnen verdrehten Wicklungsteilen 10, verdreht gemäß dem Eindrehschritt 136 gemäß Figur 16, eingefahren sind. Im in Figur 17 dargestellten Zustand befindet sich der Innenkegel 106 der Aushebeeinrichtung 102 in einer Initialposition.

Ausgehend von der in Figur 17 dargestellten Initialposition des Innenkegels 106 der Aushebeeinrichtung 102 zeigt Figur 18 dessen Absenkbewegung 110. Dadurch werden die einzelnen, in Umfangsrichtung angeordneten blechförmigen Aushebeelemente 104 in ihren Führungsnuten 134 in radialer Richtung nach au-βen verfahren, so dass deren Spitzen in Freiräume 156 zwischen den einzelnen ersten Teilen 14 und zweiten Teilen 16 der verdrehten Wicklungsteile 10 einfahren. Im in Figur 18 dargestellten Zustand ist lediglich die radiale Ausfahrbewegung, d. h. die Überführung der in radiale Richtung verfahrbaren Aushebeelemente 104 von ihrer eingefahrenen Position 140 in ihre ausgefahrene Position 142 dargestellt. Das Eindrehwerkzeug 50, den ersten Träger 52 (hier verdeckt) und den zweiten Träger 54 umfassend, enthält den Zopf 128, gebildet gemäß dem vorangegangenen Einsteckschritt 132 und dem Eindrehschritt 136. Die hier in Figur 18 nicht sichtbaren Füße der einzelnen verdrehten Wicklungsteile 10 ruhen nach wie vor auf der Reibfläche 76 der Grundplatte 74 des Eindrehwerkzeugs 50. Der Zopf 128 gemäß der Darstellung in Figur 18 ist von seiner Oberseite her durch einzelne Wicklungsteilköpfe 152 gebildet; der Übergang der Aushebeelemente 104 der Aushebeeinrichtung 102 von ihrer eingefahrenen Position 140 in ihre ausgefahrene Position 142 gemäß Figur 18 erfolgt auf dem Wege einer radial verlaufenden Durchtauchbewegung 144.

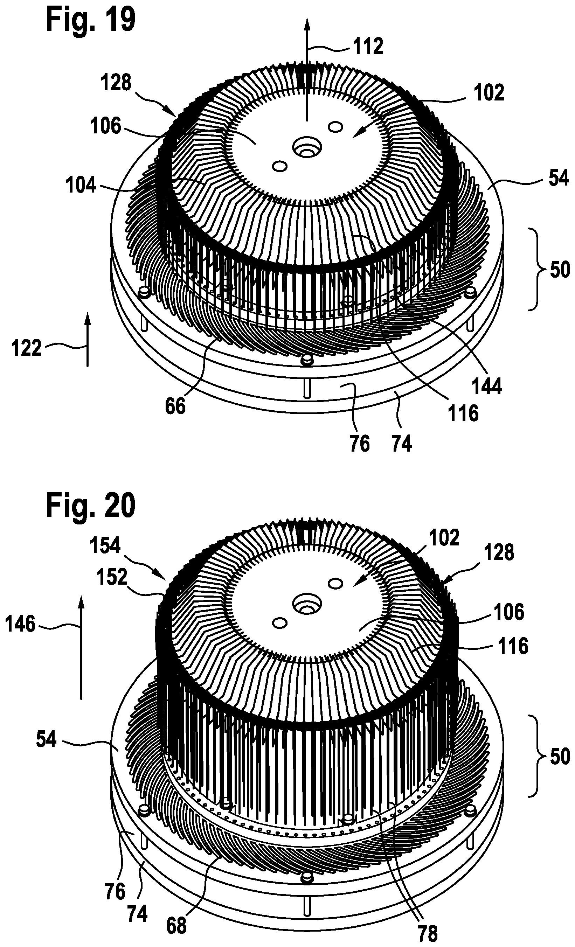

Figur 19 zeigt ein teilweises Anheben der Aushebeeinrichtung 102 soweit, dass die einzelnen Schrägen 126 der Aushebeelemente 104 der Aushebeeinrichtung 102 gerade die Unterseite des Wicklungsteilkopfs 152 der einzelnen den Zopf 128 bildenden verdrehten Wicklungsteile 10 untergreift und diesen gerade berührt. Eine Bewegung in Richtung der Z-Achse 122 gemäß Figur 19 hat dort noch nicht stattgefunden. Das Eindrehwerkzeug 50 bleibt in seiner initialen Lage, auch berühren die einzelnen Füße 78 der verdrehten Wicklungsteile 10 nach wie vor die Reibfläche 76, d. h. die Oberseite der Grundplatte 74. Aus der Darstellung gemäß Figur 19 geht hervor, dass die einzelnen Aushebeelemente 104 nach wie vor in ihrer ausgefahrenen Position 142 verharren, in die sie durch die Durchtauchbewegung 144 in die Freiräume 156 zwischen benachbarten verdrehten Wicklungsteilen 10 gelangt sind.

Figur 20 schließlich zeigt eine Anhebebewegung 146 der Aushebeeinrichtung 102 entlang der Z-Achse 122. Bei der Aushebebewegung 146 gemäß Figur 19 rutscht der Zopf 128, gebildet durch die verdrehten Wicklungsteile 10 entsprechend der Neigung der Schräge 126 an den radialen Enden der Aushebeelemente 104 beispielsweise in radialer Richtung nach innen. Dabei entsteht ein Schließen des Umfangs des Zopfs 128, ohne dass ein separater Prozessschritt beziehungsweise ein separates Werkzeug erforderlich wäre. Die einzelnen als Zopf 128 zugestellten verdrehten Wicklungsteile 10 werden durch die Schrägen 126 der einzelnen, in ihrer ausgefahrenen Position 142 befindlichen Aushebeelemente 104 untergriffen. Dies bedeutet, dass bei der Bewegung der Aushebeeinrichtung 102 entlang der Z-Achse 122 der Zopf 128 in einer Bewegung durch Untergreifen der Wicklungsteilköpfe 152 ausgehoben wird. Das Zusammenschieben, d. h. Schließen der einzelnen verdrehten Wicklungsteile 10 erfolgt dann, wenn die einzelnen ersten Teile 14 und zweiten Teile 16 der als Haarnadel 18 konfigurierten Wicklungsteile 10 ihre jeweiligen Öffnungen 56 im ersten Träger 52 und im zweiten Träger 54 vollständig verlassen haben und mittels der Schwerkraft ein geschlossener Zopf 128 entsteht.

Durch die Aushebeeinrichtung 102 gemäß der Darstellung in den Figuren 12, 13 und 14 kann insbesondere durch ein radiales Verschieben der blechförmigen Aushebeelemente 104 der Durchmesser des erhaltenen Zopfs 128 variiert werden, d. h. es kann eine Vergrößerung oder eine Verkleinerung des Durchmessers des herausgehobenen Zopfs 154 erreicht werden, wodurch er ideal weiterverarbeitet werden kann, indem er beispielsweise in ein Zwischenwerkzeug oder direkt in den Stator eingesteckt wird.

Es besteht in optionaler Weise die Möglichkeit, die einzelnen, in Umfangsrichtung gleichmäßig voneinander beabstandeten blechförmigen Aushebeelemente 104 nicht von der Innenseite über den Innenkegel 106, sondern von außen durch die einzelnen Füße 78 zu stecken. In diesem Fall müsste der Zopf 128 radial nach außen anstatt radial nach innen einrutschen; diese Abwandlungsmöglichkeit stellt eine weitere Möglichkeit dar, den erhaltenen Zopf 128 nach dem Ausheben zu schließen.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zur Herstellung einer Wicklung für eine elektrische Maschine mit zumindest nachfolgenden Verfahrensschritten:
a) Einstecken von Wicklungsteilen (10) mit einem ersten Teil (14) in einen ersten Träger (52) und mit einem zweiten Teil (16) in einen zweiten Träger (54), wobei einer der Träger (52, 54) relativ zum anderen bewegbar ist, und wobei das Wicklungsteil (10) in U-Form (12) ausgeführt ist, wobei das Wicklungsteil (10) aus Kupfer oder einer Kupferlegierung gefertigt ist, wobei sich von einem Wicklungsteilkopf (152) im Wesentlichen parallel zueinander der erste Teil (14) und der zweite Teil (16) erstrecken, welche schenkelförmig ausgeführt sind,
b) Vornahme einer Verdrehung (82) des ersten Trägers (52) um seine Z-Achse (122) relativ zum zweiten Träger (54) oder des zweiten Trägers (54) relativ zum ersten Träger (52) zur Erzeugung einer Eindrehung der Wicklungsteile (10),
c) Ausführen einer Einfahrbewegung (138) einer in Z-Richtung einfahrbaren Aushebeeinrichtung (102) in einem gemäß b) geformten Zopf (128) aus eingedrehten Wicklungsteilen (10), wobei die Aushebeeinrichtung (102) eine Anzahl von im Wesentlichen senkrecht orientierten blechförmigen Aushebeelementen (104) umfasst,
d) Positionieren der Aushebeelemente (104) in Freiräumen (156) der gemäß b) eingedrehten Wicklungsteile (10) des Zopfs (128),
e) Ausheben des Zopfs (128) in Z-Richtung (122) und
f) Schließen des Zopfs (128) aus gemäß b) eingedrehten Wicklungsteilen (10) durch schwerkraftbedingtes Verrutschen (130) des an der Aushebeeinrichtung (102) aufgenommenen Zopfs (128) an dieser, wobei ein Zusammenschieben der einzelnen verdrehten Wicklungsteile (10) erfolgt, wenn die einzelnen ersten Teile (14) und zweiten Teile (16) der Wicklungsteile (10) ihre jeweiligen Öffnungen (56) im ersten Träger (52) und im zweiten Träger (54) vollständig verlassen haben und mittels der Schwerkraft ein geschlossener Zopf (128) entsteht, wobei das schwerkraftbedingte Verrutschen (130) der eingedrehten Wicklungsteile (10) schwerkraftbedingt entsprechend einer Neigung einer Schräge (126) an Aushebeelementen (104) der Aushebeeinrichtung (102) ein Schließen des Zopfs (128) bewirkt.

2. Verfahren gemäß Anspruch 1, **dadurch gekennzeichnet, dass** die Wicklungsteile (10) - in U-Form (12) ausgeführt - in Öffnungen (56) der ersten und zweiten Träger (52, 54) in einem Steckmuster (80) eingesteckt werden.

3. Verfahren gemäß einem der Ansprüche 1 oder 2, **dadurch gekennzeichnet, dass** durch das schwerkraftbedingte Verrutschen (130) der Aushebeelemente (104) eine Vergrößerung oder eine Verringerung eines Durchmessers des Zopfs (128) erreicht wird.

4. Verfahren gemäß einem der Ansprüche 1 bis 3, **dadurch gekennzeichnet, dass** die Aushebeelemente (104) der Aushebeeinrichtung (102) während der Einfahrbewegung (138) in den gemäß b) geformten Zopf (128) eine eingefahrene Position (140) und beim Ausheben des Zopfs (128) gemäß e) in Z-Richtung (122) eine ausgefahrene Position (142) einnehmen.

5. Vorrichtung, enthaltend ein Eindrehwerkzeug (50) und eine in dieses in Z-Richtung (122) einfahrbare Aushebeeinrichtung (102), wobei die Vorrichtung dazu eingerichtet ist, das Verfahren nach einem der vorhergehenden Ansprüche durchzuführen.

6. Vorrichtung gemäß Anspruch 5, **dadurch gekennzeichnet, dass** das Eindrehwerkzeug (50) mindestens zwei konzentrisch angeordnete erste und zweite Träger (52, 54) umfasst, die jeweils in Ringform ausgeführt sind, die entlang ihres Umfangs eine Anzahl von Öffnungen (56) aufweisen, die in einreihiger Ausführung (60) oder in mehrreihiger Ausführung (62) angeordnet sind.

7. Vorrichtung gemäß einem der Ansprüche 5 oder 6, **dadurch gekennzeichnet, dass** ein Öffnungsdurchmesser (58) der Öffnungen (56) Abmessungen eines Rechteckquerschnitts (20) der ersten und zweiten Teile (14, 16) der Wicklungsteile (10) übersteigt.

8. Vorrichtung gemäß einem der Ansprüche 5 bis 7, **dadurch gekennzeichnet, dass** der zweite Träger (54) eine Anzahl von Nuten (66) umfasst, die den in diese eingesteckten Teile (14, 16) der Wicklungsteile (10) eine Bewegungsbahn (68) aufprägen, sobald eine Verdrehung (82) im Gegenuhrzeigersinn (84) oder im Uhrzeigersinn (86) des zweiten Trägers (54) relativ zum ersten Träger (52) oder eine Verdrehung (82) des ersten Trägers (52) relativ zum zweiten Träger (54) erfolgt.

9. Vorrichtung gemäß einem der Ansprüche 5 bis 8, **dadurch gekennzeichnet, dass** das Eindrehwerkzeug (50) eine Grundplatte (74) aufweist, die eine Reibfläche (76) enthält, auf der Füße (78) der ersten und zweiten Teile (14, 16) der Wicklungsteile (10) aufstehen.

10. Vorrichtung gemäß einem der Ansprüche 5 bis 9, **dadurch gekennzeichnet, dass** die Aushebeeinrichtung (102) eine Anzahl blechförmiger Aushebeelemente (104) umfasst, die in Führungsnuten (134) einer Basisplatte (108) in radialer Richtung geführt sind.

11. Vorrichtung gemäß Anspruch 10, **dadurch gekennzeichnet, dass** die Aushebeeinrichtung (102) einen Innenkegel (106) umfasst, der bei einer Absenkbewegung (110) die Aushebeelemente (104) von ihrer eingefahrenen Position (140) in ihre ausgefahrene Position (142) überführt und einen Außenkegel (107) umfasst, der die Aushebeelemente (104) radial von der ausgefahrenen Position (142) in die eingefahrene Position (140) zurückstellt.

12. Vorrichtung gemäß Anspruch 11, **dadurch gekennzeichnet, dass** die Aushebeelemente (104) eine Schräge (126) aufweisen, die in radiale Richtung gesehen, radial nach außen oder radial nach innen abfällt.

13. Verfahren gemäß einem der Ansprüche 1 bis 4, **dadurch gekennzeichnet, dass** ein Korb (32, 38) aus mindestens einem Zopf (128) aus Wicklungsteilen (10) für eine Statorwicklung einer elektrischen Maschine hergestellt wird.

## Claims

1. Method for producing a winding for an electric machine, comprising at least the following method steps:
a) inserting the winding parts (10) by way of a first part (14) into a first carrier (52) and by way of a second part (16) into a second carrier (54), wherein one of the carriers (52, 54) can be moved relative to the other, and wherein the winding part (10) is designed in a U-shape (12), wherein the winding part (10) is manufactured from copper or a copper alloy, wherein the first part (14) and the second part (16), which are designed in the form of limbs, extend substantially parallel in relation to each other from a winding part head (152),
b) twisting (82) the first carrier (52) about its Z-axis (122) relative to the second carrier (54) or the second carrier (54) relative to the first carrier (52) for creating a screw-in connection between the winding parts (10),
c) executing a retraction movement (138) of a lifting-out device (102), which can be retracted in the Z-direction, in a braid (128) which is formed according to b) and is composed of screwed-in winding parts (10), wherein the lifting-out device (102) comprises a number of substantially perpendicularly oriented plate-like lifting-out elements (104),
d) positioning the lifting-out elements (104) in clearances (156) in the winding parts (10) of the braid (128) which are screwed-in according to b),
e) lifting out the braid (128) in the Z-direction (122) and
f) closing the braid (128) composed of winding parts (10), which are screwed in according to b), by gravity-related slipping (130) of the braid (128), which is held on the lifting-out device (102), on the lifting-out device, wherein the individual twisted winding parts (10) are pushed together when the individual first parts (14) and second parts (16) of the winding parts (10) have completely left their respective openings (56) in the first carrier (52) and in the second carrier (54) and a closed braid (128) is produced by means of gravity, wherein the gravity-related slipping (130) of the screwed-in winding parts (10), due to gravity, closes the braid (128) in accordance with an incline of a slope (126) on lifting-out elements (104) of the lifting-out device (102).

2. Method according to Claim 1, **characterized in that** the winding parts (10) - designed in a U-shape (12) - are inserted into openings (56) in the first and second carriers (52, 54) in an insertion pattern (80).

3. Method according to either of Claims 1 and 2, **characterized in that** an increase in size or a reduction in size of a diameter of the braid (128) is achieved due to the gravity-related slipping (130) of the lifting-out elements (104).

4. Method according to any of Claims 1 to 3, **characterized in that** the lifting-out elements (104) of the lifting-out device (102) assume a retracted position (140) during the retraction movement (138) into the braid (128) formed according to b) and an extended position (142) when the braid (128) is lifted out according to e) in the Z-direction (122).

5. Device, including a screw-in tool (50) and a lifting-out device (102) which can be retracted into the screw-in tool in the Z-direction (122), wherein the device is designed to carry out the method according to any of the preceding claims.

6. Device according to Claim 5, **characterized in that** the screw-in tool (50) comprises at least two concentrically arranged first and second carriers (52, 54), which are each designed in the form of a ring and have a number of openings (56) along their periphery, the holes being arranged in a single-row design (60) or in a multiple-row design (62).

7. Device according to either of Claims 5 and 6, **characterized in that** an opening diameter (58) of the openings (56) exceeds dimensions of a rectangular cross section (20) of the first and second parts (14, 16) of the winding parts (10).

8. Device according to any of Claims 5 to 7, **characterized in that** the second carrier (54) comprises a number of grooves (66) which impress a movement path (68) onto the parts (14, 16), which are inserted into these grooves, of the winding parts (10) as soon as the second carrier (54) is twisted (82) in the anticlockwise direction (84) or in the clockwise direction (86) relative to the first carrier (52) or the first carrier (52) is twisted (82) relative to the second carrier (54).

9. Device according to any of Claims 5 to 8, **characterized in that** the screw-in tool (50) has a bottom plate (74), which includes a friction surface (76) on which feet (78) of the first and second parts (14, 16) of the winding parts (10) stand.

10. Device according to any of Claims 5 to 9, **characterized in that** the lifting-out device (102) comprises a number of plate-like lifting-out elements (104) which are guided in the radial direction in guide grooves (134) of a base plate (108).

11. Method according to Claim 10, **characterized in that** the lifting-out device (102) comprises an inner cone (106) which, during a lowering movement (110), moves the lifting-out elements (104) from their retracted position (140) to their extended position (142), and comprises an outer cone (107) which resets the lifting-out elements (104) radially from the extended position (142) to the retracted position (140).

12. Device according to Claim 11, **characterized in that** the lifting-out elements (104) have a slope (126) which, as seen in the radial direction, drops radially outwards or radially inwards.

13. Method according to any of Claims 1 to 4, **characterized in that** a basket (32, 38) is produced from at least one braid (128) composed of winding parts (10) for a stator winding of an electric machine.

## Revendications

1. Procédé de fabrication d'un enroulement pour une machine électrique, avec au moins les étapes de procédé suivantes :
a) l'insertion de parties d'enroulement (10) avec une première partie (14) dans un premier support (52) et avec une deuxième partie (16) dans un deuxième support (54), l'un des supports (52, 54) étant mobile par rapport à l'autre, et la partie d'enroulement (10) étant réalisée en forme de U (12), la partie d'enroulement (10) étant fabriquée en cuivre ou en un alliage de cuivre, la première partie (14) et la deuxième partie (16) s'étendant à partir d'une tête de partie d'enroulement (152) essentiellement parallèlement l'une à l'autre, lesquelles sont réalisées en forme de branche,
b) la réalisation d'une rotation (82) du premier support (52) autour de son axe Z (122) par rapport au deuxième support (54) ou du deuxième support (54) par rapport au premier support (52) pour produire un torsadage des parties d'enroulement (10),
c) l'exécution d'un mouvement de rétraction (138) d'un appareil de soulèvement (102) rétractable dans la direction Z dans une tresse (128) formée selon b) de parties d'enroulement (10) torsadées, l'appareil de soulèvement (102) comprenant un nombre d'éléments de soulèvement (104) en forme de tôle orientés essentiellement verticalement,
d) le positionnement des éléments de soulèvement (104) dans des espaces libres (156) des parties d'enroulement (10) de la tresse (128) torsadées selon b),
e) le soulèvement de la tresse (128) dans la direction Z (122) et
f) la fermeture de la tresse (128) de parties d'enroulement (10) torsadées selon b) par glissement provoqué par la force de gravité (130) de la tresse (128) reçue sur l'appareil de soulèvement (102) sur celui-ci, un rapprochement des parties d'enroulement (10) torsadées individuelles étant effectué lorsque les premières parties (14) et les deuxièmes parties (16) individuelles des parties d'enroulement (10) ont complètement quitté leurs ouvertures (56) respectives dans le premier support (52) et dans le deuxième support (54) et qu'une tresse (128) fermée est formée au moyen de la force de gravité, le glissement provoqué par la force de gravité (130) des parties d'enroulement (10) torsadées produisant une fermeture de la tresse (128) provoquée par la force de gravité conformément à une inclinaison d'une pente (126) sur des éléments de soulèvement (104) de l'appareil de soulèvement (102).

2. Procédé selon la revendication 1, **caractérisé en ce que** les parties d'enroulement (10) - réalisées en forme de U (12) - sont insérées dans des ouvertures (56) des premier et deuxième supports (52, 54) selon un motif d'insertion (80).

3. Procédé selon l'une quelconque des revendications 1 ou 2, **caractérisé en ce que** le glissement provoqué par la force de gravité (130) des éléments de soulèvement (104) permet d'augmenter ou de réduire un diamètre de la tresse (128).

4. Procédé selon l'une quelconque des revendications 1 à 3, **caractérisé en ce que** les éléments de soulèvement (104) de l'appareil de soulèvement (102) occupent une position rétractée (140) pendant le mouvement de rétraction (138) dans la tresse (128) formée selon b) et une position déployée (142) lors du soulèvement de la tresse (128) selon e) dans la direction Z (122).

5. Dispositif, contenant un outil de torsadage (50) et un appareil de soulèvement (102) rétractable dans celui-ci dans la direction Z (122), le dispositif étant adapté pour mettre en oeuvre le procédé selon l'une quelconque des revendications précédentes.

6. Dispositif selon la revendication 5, **caractérisé en ce que** l'outil de torsadage (50) comprend au moins deux premier et deuxième supports (52, 54) agencés de manière concentrique, chacun réalisé en forme d'anneau, présentant le long de leur périphérie un nombre d'ouvertures (56), agencées selon une configuration en une seule rangée (60) ou selon une configuration en plusieurs rangées (62).

7. Dispositif selon l'une quelconque des revendications 5 ou 6, **caractérisé en ce qu'**un diamètre d'ouverture (58) des ouvertures (56) dépasse des dimensions d'une section transversale rectangulaire (20) des première et deuxième parties (14, 16) des parties d'enroulement (10).

8. Dispositif selon l'une quelconque des revendications 5 à 7, **caractérisé en ce que** le deuxième support (54) comprend un nombre de rainures (66) imprimant une trajectoire de déplacement (68) aux parties (14, 16) des parties d'enroulement (10) qui y sont insérées dès qu'une rotation (82) dans le sens anti-horaire (84) ou dans le sens horaire (86) du deuxième support (54) par rapport au premier support (52) ou une rotation (82) du premier support (52) par rapport au deuxième support (54) est effectuée.

9. Dispositif selon l'une quelconque des revendications 5 à 8, **caractérisé en ce que** l'outil de torsadage (50) présente une plaque de base (74) contenant une surface de frottement (76) sur laquelle se dressent des pieds (78) des première et deuxième parties (14, 16) des parties d'enroulement (10).

10. Dispositif selon l'une quelconque des revendications 5 à 9, **caractérisé en ce que** l'appareil de soulèvement (102) comprend un nombre d'éléments de soulèvement en forme de tôle (104) qui sont guidés dans des rainures de guidage (134) d'une plaque de base (108) dans la direction radiale.

11. Dispositif selon la revendication 10, **caractérisé en ce que** l'appareil de soulèvement (102) comprend un cône intérieur (106) qui, lors d'un mouvement d'abaissement (110), fait passer les éléments de soulèvement (104) de leur position rétractée (140) à leur position déployée (142), et un cône extérieur (107) qui ramène radialement les éléments de soulèvement (104) de la position déployée (142) à la position rétractée (140).

12. Dispositif selon la revendication 11, **caractérisé en ce que** les éléments de soulèvement (104) présentent une pente (126) qui, vue dans la direction radiale, est inclinée radialement vers l'extérieur ou radialement vers l'intérieur.

13. Procédé selon l'une quelconque des revendications 1 à 4, **caractérisé en ce qu'**un panier (32, 38) est fabriqué à partir d'au moins une tresse (128) de parties d'enroulement (10) pour un enroulement statorique d'une machine électrique.
